# EUROPÄISCHE PATENTSCHRIFT

(11) **EP 0 403 669 B1**
(45) Veröffentlichungstag und Bekanntmachung des Hinweises auf die Patenterteilung: **24.03.1993**
(21) Anmeldenummer: 89111032.2
(22) Anmeldetag: 17.06.1989
(51) Int. Cl.: B01D 11/02, B09B 5/00

(54) **Verfahren und Vorrichtung zur Elution von körnigem Waschgut**
Method and device for the elution of a granular material
Procédé et dispositif d'élution de matières granuleuses

(43) Veröffentlichungstag der Anmeldung: 27.12.1990
(73) Patentinhaber: POSSEHL KIES + HAFEN + UMWELTSCHUTZ GMBH, 23554 Lübeck (DE)
(72) Erfinder: Viehr, Helmut, D-2000 Hamburg 63 (DE)
(74) Vertreter: Plöger, Ulrich

(56) Entgegenhaltungen:
- EP-A- 0 185 831
- DE-A- 3 336 980
- DE-A- 3 722 277
- FR-A- 498 678
- NL-A- 8 200 155
- KORRESPONDENZ ABWASSER, Band 35, Nr. 7, Juli 1988, St. Augustin (DE); B. GALLENKEMPER et al.:"Reduzierung des Kohlenwasserstoffgehaltes von Schlämmen aus Leichtflüssigkeitsabscheidern", Seiten 668-674

## Beschreibung

Die Erfindung bezieht sich auf ein Verfahren dem Oberbegriff des Patentanspruch 1. Weiterhin bezieht sich die Erfindung auf eine Vorrichtung zur Durchführung dieses Verfahrens nach dem Oberbegriff des Patentanspruchs 7.

Ein Verfahren dieser Art sowie eine Vorrichtung zur Durchführung dieses Verfahrens ist nach der DE-A 33 36 980 bekannt. Dabei bildet das Waschgut, also in der Regel Erdreich, Bestandteil eines Reinigungssystemes mit einem Demulgator bzw. aus einem Tensid, Wasser und Luft derart, daß die letzten beiden Stoffe in einem Strömungszustand gehalten werden, wie er verfahrenstechnisch bei Feststoffpartikeln als Wirbelbett bezeichnet wird. Das Waschgut wird in einem für dieses verfahren geeigneten Behälter behandelt und erfährt dort einen Auftrieb entgegengesetzt zur Schwerkraftrichtung infolge der Aufwärtsstömung. Soweit Waschgutpartikel nicht von der Strömung erfaßt werden, werden sie mittels einer Austragvorrichtung, insbesondere eines umlaufenden Förderbandes, im Boden des Behälters entnommen. Soweit Aussonderungen gröberer Partikel vorzunehmen sind, ist für diesen Zweck eine dementsprechend tief gelagerte Förderschnecke, vorgesehen. Im übrigen werden die nicht schwimmfähigen Partikel von dem Förderband des Behälters ausgetragen. Diese Abförderung schließt vor allem Waschgutpartikel ein, welche zunächst als schwimmfähig emporgetragen wurden, dann aber durch die Reinigungsbehandlung wegen der Ölabgabe spezifisch schwerer geworden sind und deshalb bevorzugt zu Boden sinken. Das aus diesem Reinigungsprozeß ausscheidende Waschgut ist noch weitgehend feucht, da es, was sein Nässeaufnahmevermögen anbelangt, seiner Entnahmestelle zufolge gesättigt gehalten war.

Während das vorstehend beschriebene Verfahren eine im wesentlichen kontinuierliche Arbeitweise vorsieht, findet für die Reinigung von Erdreich auch der chargenweise Betrieb statt. So sieht die FR-A-498 678 für die Reinigung von Sand zwei durch einen Überlauf miteinander verbundene Becken vor, von denen das eine, größere Becken der Behandlung von zu reinigendem Sand mit einem Gemisch von Wasser und Luft vorsieht, so daß hochgehobener Sand über einen Überlauf in das anschließende, kleine Becken gelangt, dessen Boden porös ist, um nach einer Sedimentation eine Absaugung vornehmen zu können, dank welcher Sand mit herabgesetztem Nässegehalt chargenweise entnommen werden kann. Die Saugleistung unterliegt einem erheblichen, von der Höhe des abgeschiedenen Sandes abhängigen Strömungswiderstand, so daß die voraufgegangene Sedimentation nur soweit sinnvoll ist, wie die Saugleistung reicht. Der an sich wünschenswerten, geringen Strömungsgeschwindigkeit durch Wahl eines großen Behältervolumens sind von daher also Grenzen gesetzt.

Gemeinsam ist den Verfahren zur Eluierung von Erdreich, daß man sie nur bis zu demjenigen Ausmaß betreiben kann, welches durch die Aufnahmefähigkeit, des Waschbades an den kontaminierenden Stoffen vorgegeben ist. Als Folge hiervon muß Waschbad umso häufiger ausgewechselt werden, je weitreichender man die Dekontaminierung vorsieht. Da auf diese Weise größere Mengen an verunreinigtem Wasser entstehen, wird das eigentliche Dekontaminierungsproblem zunächst nur verlagert. Die Reinigung des Waschgutes ist ihrerseits um so aufwendiger, je mehr Waschflüssigkeit benutzt wird. Zu Sanierung von Erdreich in derartigem Ausmaß, wie es in der Praxis gegeben ist, müssen schließlich die Anpassungsfähigkeit und auch die Leistungen von Bodensanierungen einen hohen Entwicklungsstandard aufweisen.

Vom einleitend dargestellten Stand der Technik ausgehend liegt der Erfindung die Aufgabe zugrunde, ein Verfahren sowie eine zu dessen Ausführung vorsehende Vorrichtung zu schaffen, die einerseits unterschiedlichen Leistungsstufen der Bodenkontamination entsprechend eingesetzt werden können, wobei andererseits der Investitions- und Betriebsaufwand erheblich gesenkt werden können. Insbesondere soll durch die erfindungsgemäße Entsorgung vermieden werden, daß das Kontaminationsproblem lediglich auf aus dem Prozeß ausscheidende Stoffe, wie Luft und Wasser, verlagert wird. Deshalb soll die Erfindung vor allem die Voraussetzungen einer wirkungsvollem Entwässerung des Waschgutes schaffen, dessen Rückgabe weitgehend getrocknet möglich sein soll.

Die Erfindung löst diese Aufgabenstellung durch die Vorschläge der Patentansprüche.

Somit erweist sich die Erfindung als ein Zusammenwirken mehrerer Maßnahmen, durch welche einerseits eine vol befriedigende Dekontamination erzielt wird, andererseits die Voraussetzungen für einen Kreislauf des Waschmittels geschaffen werden. Im einzelnen führt die Wirkung des an sich bekannten Tensides, bei dem es sich zumindest um ein biologisch abbaubares Erzeugnis etwa der Art, wie es unter der Firmenbezeichnung ASCAL im Handel ist, dazu, daß kontaminierende Kohlenwasserstoffe von der Kornoberfläche des Waschgutes abgelöst und an die Phasengrenze zwischen Luftbläschen und Waschwasser abgegeben werden Damit ist eine wichtige Voraussetzung für die Austragung von insbesondere Kohlenwasserstoffverunreinigungen erfüllt. Die Beaufschlagung mit Waschwasser und Luftstrahlen bringt das Waschgut in Form eines Wirbelbettes in Bewegung, ohne daß man hierzu konstruktiv aufwendig gestaltete Schaufeln oder dergleichen einsetzen muß. Besonders günstig wirkt sich beim Wirbelbett aus, daß beim Erdreich, welches ein sehr ausgedehntes Korngrößenspektrum aufweist, keine schwereren Partikel angehoben werden müssen. Sie können, nach dem sie einmal mit dem übrigem Waschgut in das Waschbad verbracht sind, darin von den leichteren, empor getragenen Partikeln getrennt und umspült werden. Neben der durch Tenside bewirkten Reinigung können Verunreinigungen indes auch als Suspension in das Waschwasser überführt werden. Beim Erreichen der Oberfläche schäumt das emporströmende Waschmittel derart auf, daß die Verunreinigungen im wesentlichen bereits in der Schaumphase enthalten sind.

Das über die Eluatrinne abgezogene, aufgeschäumte Waschwasser scheidet seine mitgenommenen Feststoffe in der Sedimentationsabscheidung ab, die von hier in an sich bekannter Weise entfernt werden können. Das derart geklärte Wasser kann unmittelbar oder mittelbar im Kreislauf zurückgeführt werden, so daß lediglich das von dem Austrag mitgenommene Waschmittel zu ersetzen ist.

Besonders günstig gestaltet sich die Entwässerung des Waschgutes am Schluß der Behandlung, weil dann die Körnung des Bettes von unten nach oben kleiner geworden ist. Wenn alsdann das Wasser durch Evakuierung von unten entzogen wird, besteht nicht die Gefahr, daß durch die Feinkornbestandteile der Zugang zu der am übringen Waschgut anhaftenden Nässe behindert wird. Es gelingt auf diese Weise, die Nässe des Waschgutes auf 10 bis 20 %, bezogen auf Trockensubstanz, herabzusetzen. Das abgesaugte Wasser hat insbesondere als Restkontamination weniger als 10 mg/L, was dem hohem Reinigungsgrad des Waschgutes entspricht.

In Weiterentwicklung des erfindungsgemäßen Verfahrens läßt sich die Sedimentationsbehandlung mit einer Koaleszenzabscheidung verbinden, indem an sich bekannte Koaleszenzabscheider in die Flüssigkeitsströmung einbezogen werden. Die sich zusammenballenden Verunreinigungen können auf diese Weise zusätzlich ausgeschieden werden.

Eine weitergehende Reinigung des Waschwassers wird mit einer abschließenden Aktivkohlefilterung erzielt. Da in vielen Fällen das Waser dem Erdreich weider zugeführt wird, läßt es sich in dieser Stufe auch mit Mikroorganismen anreichern, die unter dem Gesichtspunkt einer Bodenverbesserung ausgewählt werden.

Sofern eine Kontamination mit aromatischen, polyzyklischen oder chlorierten KW besteht, ist die anschließende Behandlung im Rührwerk mit der Dosierung zum Zwecke der Spaltung und Fällung angebracht. Auf diese Weise gelangt man auch in sehr kritischen Fällen von Verunreinigungen noch zu einem für die Wiederverwendung brauchbaren Waschwasser.

Im Ergebnis trägt erfindungsgemäß das Waschwasser die Verunreinigungen aus dem Waschgut, also in der Regel aus dem Erdreich, heraus, um dann einen Reinigungsprozeß zu durchlaufen, der in der beschriebenen Weise variabel ist.

Die Funktion des Wirbelbettes wird noch dadurch verbessert, daß die Zuführung von Wasser und Luft teilweise in halber Höhe des Bettes zusätzlich vorgenommen wird.

Insbesondere bei der Verunreinigung des Bodens durch Mineralöl wird oberhalb des Wirbelbettes bereits eine Teilung des Wassers vorgenommen, wobei Ölschaum und Sedimente in einem Vorabscheider für Schwimmstoffe abgeschieden werden, indem die Sedimentation eine Trennung von schweren Feststoffen gestattet.

Mit dem erfindungsgemäßen Verfahren ließen sich mit gutem Erfolg Rückstände von Ölabscheidern aufbereiten. Sehr gute Ergebnisse werden bei sogenannten Sandfängern von Tankstellen erreicht, wobei die ölhaltigen Rückstände nicht speziellen Verbrennungsanlagen zugeführt werden müssen, sondern sich in der vorgeschlagenen Art so aufbereiten lassen, daß sie schließlich einer normalen Mülldeponie zugeführt werden können, während das ausgewaschene Öl einer weiteren Aufbereitung zuführbar ist.

Die erfindungsgemäße Vorrichtung sieht insbesondere eine Waschmulde vor, innerhalb welcher das Waschgut aufzunehmen ist, die einen gelochten Filterboden aufweist, so daß sich die Strahldüsen für den Eintrag von Waschwasser und Luft darin anordnen lassen. Weiterhin können im gelochten Filterboden Filterkerzen für die Vakuumabsaugung des Waschgutes angeordnet werden, so daß das Waschgut am Ende der Behandlung auf den gewünschten Nässegehalt eingestellt werden kann, bevor es wiederum entfernt wird. Zur Entfernung eignet sich eine kippbare Ausführung der Waschmulde, indem sie um eine paralell zu einer schrägen Muldenwand verlaufende Achse verschwenkbar ist. Die Waschmulde hat vorteilhaft in halber Höhe noch weitere Strahldüsen für Luft und Wasser.

Das über eine Leitung aus der Waschmulde abzuführende Eluat gelangt über eine Rinne in eine erste Kammer für die Schwerkraftabscheidung der Schwebstoffe. Innerhalb dieser bzw. innerhalb einer zweiten Kammer werden an sich bekannte Koaleszenzabscheider so angeordnet, daß Zusammenballungen mit dem abgeschiedenen Sediment austragbar sind. Weiterhin kann eine Kammer mit Rührwerk und Dosiereinrichtung sowie einem Reaktionsraum zum Spalten und Fällen von verbleibenden Kontaminationen ausgeführt werden.

Den Abschluß des Strömungsverlaufes bildet zweckmäßig ein Aktivfilter sowie ein Absetzbecken für Ausflockungen, so daß über eine leichte Trennung das in gewünschter Weise gereinigte Waschwasser dem Kreislauf zurückgeführt werden kann. Lediglich im Umfang der ausscheidenden, wasserhaltigen Substanz muß dem Verfahren von außen Wasser zugeführt werden. Häufig wird dieses jedoch schon durch das Wasser mit dem Waschgut eingebracht.

Eine erste Veranschaulichung der Erfindung ergibt sich aus den beschriebenen Betriebsergebnissen:

| Waschgut | unbehandelt Mineralölgehalt mg/kg Trockensubstanz | erfindungsgemäß behandelt Mineralölgehalt mg/kg Trockensubstanz |
|---|---|---|
| Erdreich | 16.250 | 46 |
| Erdreich | 9.670 | 24 |

Weiterhin sei die Erfindung anhand der schematischen Zeichnungen veranschaulicht. Darin zeigen:
- Figur 1: eine Waschmulde in seitlicher Ansicht,
- Figur 2a: eine Aufsicht entsprechend Figur 1,
- Figur 2b: eine Kammer für die Schwerkraftabscheidung,
- Figuren 2c u. 2d: Kammern für die Schwerkraftabscheidung mit einer Koaleszenzabscheidung.
- Figur 2e: eine Kammer mit Dosiereinrichtung, Spalt- und Fällanlage,
- Figur 2f: einen Aktivkohlefilter mit Sauerstoffzufuhr für eine Mikroorganismen-Anreicherung,
- Figur 3: eine seitliche Ansicht entprechend Figur 2b, und
- Figur 4: eine seitliche Ansicht entsprechend Figuren 2c und 2d,
- Figur 5: eine seitliche Ansicht entsprechend Figur 2e,
- Figur 6: eine seitliche Ansicht entsprechend Figur 2f.

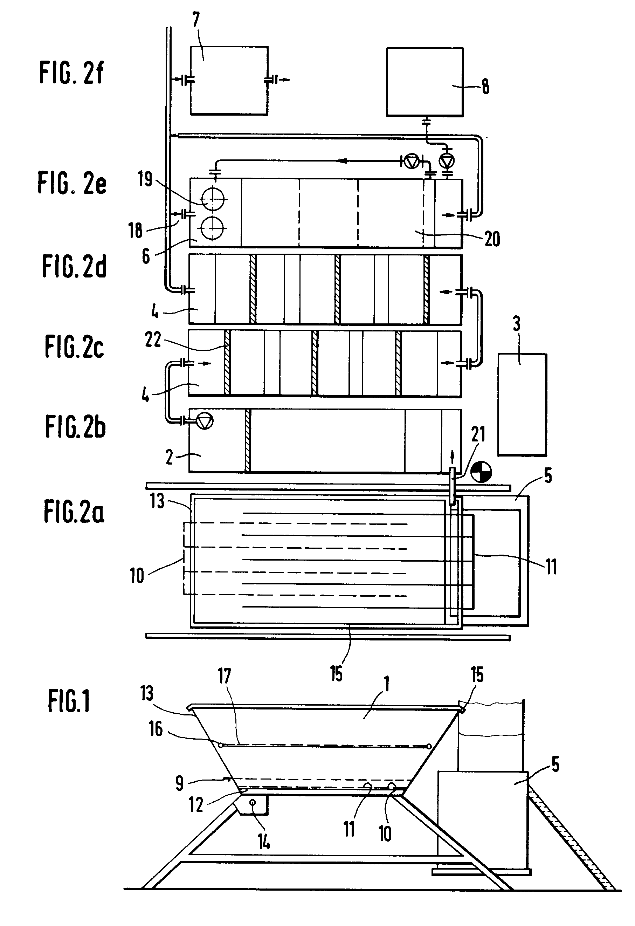

Die Waschmulde nach Figur 1 besitzt einen gelochten Filterboden 9, in welchem Düsen 10 und 11 für Wasser und Druckluft angeordnet sind. Weiterhin nimmt der gelochte Filterboden 9 Vakuumfilterkerzen 12 für die Entwässerung des Waschgutes am Ende eines Waschvorganges auf.

Weitere Düsen 16 und 17 sind in halber Höhe Waschmulde 1 angeordnet. Für die Versorgung erkennt man einen Frischwasserbehälter 5. Am Ende einer Behandlung läßt sich das Waschgut durch Kippen der Waschmulde 1 um ihre Achse 14 parallel zu ihrer schrägen Wand 13 entnehmen.

Das Eluat wird während der Behandlung über die Eluatrinne 15 abgezogen. Es gelangt in einen Austragbehälter unterhalb der genannten Rinne. Über die Leitung 21 strömt das Waschwasser dann in eine erste Kammer 2 zur Schwerkraftabscheidung seiner Schwebstoffe, wie Figur 2b zeigt. Man erkennt, daß es sich um eine Umlenkung mit einer Querschnittsveränderung handelt, so daß die Schwerkraftabscheidung stattfinden kann. Anschließend strömt das Waschwasser, wie Figur 2c veranschaulicht, in eine weitere Kammer 4 Schwerkraftabscheidung mit Koaleszenzabscheidern 22.

In den folgenden Kammern sind, wie anhand der Figur 2d veranschaulicht, ebenfalls Koaleszenzabscheideeinrichtungen 22 angeordnet, die als solche bekannt sind.

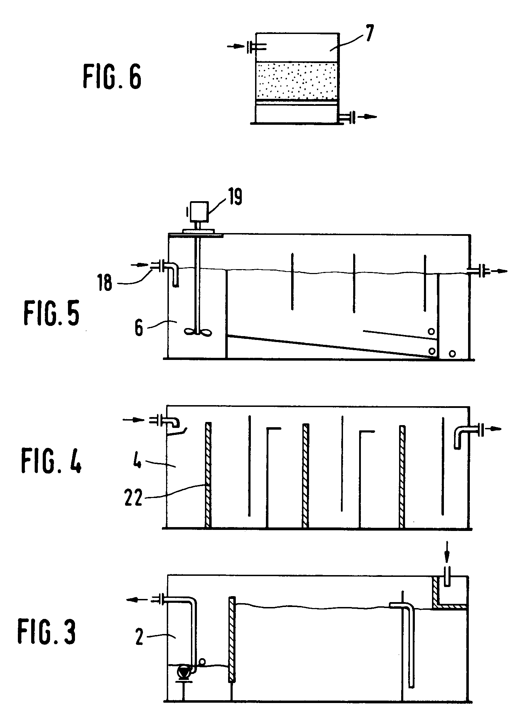

Schließlich gelangt das auf diese Weise weiterhin gereinigte Wasser zur Entfernung zyklischer und chlorierter KW in die Kammer 6 entsprechend den Figuren 2e und 5, wo eine Dosiereinrichtung 18, ein Rührwerk 19 und ein Reaktionsraum 20 vorgesehen sind. Das hierin erfindungsgemäß weiterbehandelte Wasser gelangt schließlich über einen Aktivkohlefilter 7 entsprechend Figuren 2f und 6 und gegebenenfalls ein Absetzbecken 8 entsprechend den rechtem Teil von Figur 2f zum Rücklauf oder Siel.

Für die Versorgung der Gesamtanlage mit Druckluft sowie für die Evakuierung ist noch ein Maschinenblock 3 vorgesehen, der in Nähe der Waschmulde 1 und der Kammer 2 aufgestellt ist.

## Patentansprüche

1. Verfahren zur Elution von körnigem Waschgut, insbesondere von kontaminiertem, feinkörnigem Erdreich, wobei das Waschgut eine Behandlung in einem Waschbett mit Waschwasser erfährt, dem ein Tensid zugesetzt ist, wobei es gleichzeitig mit Luftstrahlen von unten in das Waschgut unter Bildung eines Wirbelbettes eingebracht wird, aus dem das emporströmende Waschwasser mit aufgestiegenem, waschgutführendem Schaum über eine Eluatrinne abgezogen und das Waschwasser wenigstens teilweise im Kreislauf zurückgeführt wird,
dadurch gekennzeichnet,
daß das Waschgut chargenweise aufgegeben und behandelt wird,
das abgezogene, Schaum und Waschgut führende Waschwasser sedimentierend behandelt wird, woraufhin die Sedimente ausgetragen werden
und das nicht mit dem Schaum abgeführte Waschgut nach beendigter Reinigung im Waschbett entwässert und dann entnommen wird.

2. Verfahren nach Anspruch 1, wobei Waschwasser und Druckluft oberhalb des Bodens des Wirbelbettes zugeführt werden,
dadurch gekennzeichnet,
daß die Zuführung in halbe Höhe des Wirbelbettes vorgenommen wird, wobei sie auf einen Teil des Waschwassers und der unter Druck stehenden Luft begrenzt ist.

3. Verfahren nach den Ansprüchen 1 und 2,
dadurch gekennzeichnet,
daß dem gereinigten Waschgut Wasser durch Absaugung von unten her entzogen wird, bis der restliche Wassergehalt des Waschgutes 10 bis 20 % Wasser, bezogen auf Trockensubstanz, aufweist.

4. Verfahren nach den Ansprüchen 1 bis 3,
dadurch gekennzeichnet,
daß der Elutionsprozeß so lange betrieben wird, bis das Waschwasser eine Restkontamination an Mineralöl von weniger als 10 mg/l aufweist.

5. Verfahren nach den Ansprüchen 1 bis 4,
dadurch gekennzeichnet,
daß innerhalb der Sedimentation wenigstens teilweise Koaleszenzabscheidungen vorgenommen werden.

6. Verfahren nach den Ansprüchen 1 bis 5,
dadurch gekennzeichnet,
daß das Waschwasser bei einer Kontamination mit aromatischen, polycyklischen oder chlorierten KW zwischen Sedimentation und Filterung in eins Rührwerk mit Dosierung für die Spaltung und Fällung behandelt wird.

7. Vorrichtung zur Durchführung des Verfahrens nach den Ansprüchen 1 bis 6, die eine Waschmulde (1) mit für des Waschgut undurchlässigem Boden (9) sowie mit Einspeiseeinrichtungen (10, 11) für Wasser und Druckluft aufweist, die Waschmulde (9) weiterhin mit einer Eluatrinne (15) versehen ist sowie über eine Rückführungsleitung mit dem im Kreislauf geführte Waschwasser beaufschlagbar ist,
dadurch gekennzeichnet,
daß die Waschmulde (1) mit einem gelochten Filterboden (9) versehen ist, in dem Strahldüsen (10, 11) für den Eintrag von Waschwasser und Luft angeordnet sind,
und daß im Kreislauf des Waschwassers mindestens eine Schwerkraftabscheidung vorgesehen ist.

8. Vorrichtung nach Anspruch 7,
dadurch gekennzeichnet,
daß im gelochten Filterboden (9) weiterhin Filterkerzen (12) für die Vakuumabsaugung des im Waschgut verbleibenden Wassers vorgesehen sind.

9. Vorrichtung nach den Ansprüchen 7 und 8,
dadurch gekennzeichnet,
daß die Waschmulde (1) zum Zwecke ihrer Entleerung um eine parallel zu einer schrägen Muldenwand (13) laufende Achse (14) kippbar ist.

10. Vorrichtung nach den Ansprüchen 7 bis 9,
dadurch gekennzeichnet,
daß die Waschmulde in etwa ihrer halben Höhe weitere Strahldüsen (16, 17) für Waschwasser und Luft aufweist.

11. Vorrichtung nach den Ansprüchen 7 bis 10,
dadurch gekennzeichnet,
daß der Waschmulde (1) eine erste Kammer (2) für die Durchleitung des Eluates bei Schwerkraftabscheidung seiner Schwebstoffe nachgeschaltet ist.

12. Vorrichtung nach den Ansprüchen 7 bis 11,
dadurch gekennzeichnet,
daß der ersten Kammer (2) wenigstens eine weitere Kammer (4) für die Schwerkraftabscheidung mit Koaleszenzabscheidern (16) in Strömungsrichtung des Eluates nachgeschaltet ist.

13. Vorrichtung nach den Ansprüchen 7 bis 12,
dadurch gekennzeichnet,
daß der weiteren Kammer (4) in Strömungsrichtung des Eluates eine Kammer (6) mit einer Dosiereinrichtung (18), einen Rührwerk (19) und einem Reaktionsraum (20) zum Spalten und Fällen nachgeschaltet ist.

14. Vorrichtung nach den Ansprüchen 7 bis 13,
dadurch gekennzeichnet,
daß im Strömungsverlauf des Eluates abschließend ein Aktivfilter (7) sowie ein Absetzbecken (8) für Ausflockungen angeordnet sind.

## Claims

1. Method for the elution of granular washed produce, especially of contaminated, fine-grained earth, the washed produce being subjected to a treatment in a washing bed with wash water to which a surfactant has been added, air jets being simultaneously injected from below into the washed produce to form a fluidized bed, from which the upstreaming wash water is drawn off with ascending, washed produce-entraining foam via a channel and the wash water is at least partially recirculated,
characterized in that
the washed produce is fed and treated in batch quantities,
the drawn-off, foam and washed produce carrying wash water is treated in a sedimentary manner, whereupon the sediments are discharged,
and the washed produce not removed with the foam is drained after completed cleaning in the washing bed and subsequently recovered.

2. Method according to claim 1, in which wash water and compressed air are injected above the bottom of the fluidized bed,
characterized in that
the injection is made at half the height of the fluidized bed and is limited to part of the wash water and of the pressurized air.

3. Method according to claims 1 and 2,
characterized in that
water is extracted from the clean washed produce by suction from below, until the residual water content of the washed produce amounts to between 10 and 20% water, referred to dry matter.

4. Method according to claims 1 to 3,
characterized in that
the elution process is continued until the wash water features a residual contamination with mineral oil of less than 10 mg/l.

5. Method according to claims 1 to 4,
characterized in that
coalescence precipitations are effected at least partially within the sedimentation.

6. Method according to claims 1 to 5,
characterized in that
the wash water is treated in case of contamination with aromatic, polycyclic or chlorinated hydrocarbon between sedimentation and filtering in an agitator with dosing for decomposition and precipitation.

7. Facility for the implementation of the method according to claims 1 to 6, which features a washing trough (1) with a bottom (9) impervious to the washed produce as well as feeding devices (10,11) for water and compressed air, the washing trough (9) being equipped, furthermore, with an eluate channel (15) as well as a return line for the recirculation of the wash water,
characterized in that
the washing trough (1) is provided with a perforated filtering bottom (9), in which jet nozzles (10,11) are arranged for the injection of wash water and air,
and that at least one gravity separation is provided in the wash water circuit.

8. Facility according to claim 7,
characterized in that
candle filters (12) are additionally provided in the perforated filtering bottom (9) for the vacuum suction of the residual water left in the washed produce.

9. Facility according to claims 7 and 8,
characterized in that
the washing trough (1) is tiltable about an axis (14) running parallel to an inclined trough wall (13) for discharge purposes.

10. Facility according to claims 7 to 9,
characterized in that
the washing trough features at approximately half its height additional jet nozzles (16,17) for wash water and air.

11. Facility aacording to claims 7 to 10,
characterized in that
a first chamber (2) is arranged downstream of the washing trough (1) for the passage of the eluate for gravity separation of the suspended matter.

12. Facility according to claims 7 to 11,
characterized in that
at least one further chamber (4) is arranged downstream of the first chamber (2) for gravity separation with coalescence separators (16) in the direction of flow of the eluate.

13. Facility according to claims 7 to 12,
characterized in that
a chamber (6) with a dosing device (18), an agitator (19) and a reaction space (20) for separation and precipitation is arranged down-stream of the additional chamber (4) in the direction of flow of the eluate.

14. Facility according to claims 7 to 13,
characterized in that
an active filter (7) as well as a settling tank (8) for flocculation are finally arranged in the flow path of the eluate.

## Revendications

1. Procédé d'élution de produit à laver, en particulier de terre contaminée à granulation fine, le produit à laver étant soumis à un traitement dans un lit de lavage auquel est ajouté un tenside, et qui est simultanément alimenté par des jets d'air insuflés dans le produit à laver par le bas, en formant un lit fluidisé, à partir duquel l'eau de lavage sortant par le haut avec la mousse montante porteuse de produit à laver est éliminée par une goulotte à éluats, et l'eau de lavage est au moins partiellement ramenée dans le circuit,
caractérisé en ce que
le produit à laver est introduit et traité par charge,
l'eau de lavage éliminée transportant la mousse et le produit à laver est traitée par sédimentation, après lequel traitement les sédiments sont évacués,
et en ce que, après la fin du nettoyage, le produit à laver non éliminé avec la mousse est déshydraté dans le lit de lavage et est prélevé.

2. Procédé selon la revendication 1, l'eau de lavage et l'air comprimé étant alimentés au-dessus du fond du lit fluldisé,
caractérisé en ce que
l'alimentation est réalisée à mi-hauteur du lit fluidisé, et est limitée à une partie de l'eau de lavage et de l'air soumis à pression.

3. Procédé selon les revendications 1 et 2,
caractérisé en ce que
l'eau est retirée du produit à laver par aspiration par le bas, jusqu'à ce que la teneur résiduelle en eau du produit à laver présente 10 à 20 % d'eau par référence à la substance sèche.

4. Procédé selon les revendications 1 à 3,
caractérisé en ce que
le procès d'élution est réalisé jusqu'à ce que l'eau de lavage présente une contamination résiduelle inférieur à 10 mg/l en huile minérale.

5. Procédé selon les revendications 1 à 4,
caractérisé en ce que
pendant la sédimentation des séparations par coalescence sont réalisées au moins partiellement.

6. Procédé selon les revendications 1 à 5,
caractérisé en ce que
l'eau de lavage est traitée dans un mélangeur avec dosage pour la séparation et la précipitation en cas de contamination aux hydrocarbures aromatiques, polycycliques ou chloré entre sédimentation et filtration.

7. Dispositif de réalisation du procédé selon les revendications 1 à 6, présentant un berceau de lavage (1) avec un fond imperméable (9) pour le produit de lavage, et équipé d'équipements d'alimentation (10, 11) pour l'eau et l'air comprimé, le berceau de lavage (9) étant en outre équipé d'une goulotte à éluat (15) et d'une conduite de retour pouvant être soumise à la charge de l'eau de lavage présente dans le circuit,
caractérisée en ce que
le berceau de lavage (1) est muni d'un fond filtrant percé (9) dans lequel sont agencées des buses de pulvérisation (10, 11) destinées à l'apport d'eau de lavage et d'air,
et en ce qu'au moins une séparation par gravité est prévue dans le circuit de l'eau de lavage.

8. Dispositif selon la revendication 7,
caractérisé en ce que
des filtres bougies (12) destinées à l'aspiration sous vide de l'eau résiduelle demeurant dans le produit à laver sont prévus dans le fond filtrant percé (9),

9. Dispositif selon les revendications 7 et 8,
caractérisé en ce que
le berceau de lavage (1) est basculable, en vue de sa vidange, autour d'un axe (14) placé parallèlement à une paroi oblique du berceau (13).

10. Dispositif selon les revendications 7 à 9,
caractérisé en ce que
le berceau de lavage présente, à la moitié environ de sa hauteur, d'autres buses de pulvérisation (16.17) pour l'eau de lavage et pour l'air.

11. Dispositif selon les revendications 7 à 10,
caractérisé en ce qu'
une première chambre (2) est placée en aval du berceau de lavage (1) pour l'écoulement de l'éluat lors de la séparation par gravité de ses substances en suspension.

12. Dispositif selon les revendications 7 à 11,
caractérisé en ce
qu'au moins une deuxième chambre (4) pour la séparation par gravité avec séparateurs par coalescence (16) est plcée en aval de la première chambre (2) dans le sens d'écoulement de l'éluat.

13. Dispositif selon les revendications 7 à 12,
caractérisé en ce
qu'est implantée, en aval de la deuxième chambre (4) dans le sens d'écoulement de l'éluat, une chambre (6) munie d'un équipement de dosage (18), d'un malaxeur (19) et d'un espace de réaction (20) pour la séparation et la précipitation.

14. Dispositif selon les revendications 7 à 13,
caractérisé en ce que
sont implantés, dans le déroulement de l'écoulement de l'éluat, un filtre actif (7) et un bassin de décantation (8) pour le floculage.
